(19) Europäisches Patentamt
European Patent Office
Office européen des brevets

(11) **EP 3 576 072 B1**

(12) **EUROPEAN PATENT SPECIFICATION**

(45) Date of publication and mention
of the grant of the patent:
**06.07.2022 Bulletin 2022/27**

(51) International Patent Classification (IPC):
**G08G 1/16** $^{(2006.01)}$

(52) Cooperative Patent Classification (CPC):
**G08G 1/166; G08G 1/167**

(21) Application number: **19174307.9**

(22) Date of filing: **14.05.2019**

(54) **ALARM SYSTEM FOR VEHICLE**

ALARMSYSTEM FÜR FAHRZEUG

SYSTÈME D'ALARME POUR VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.06.2018 JP 2018106371**

(43) Date of publication of application:
**04.12.2019 Bulletin 2019/49**

(73) Proprietor: **Mazda Motor Corporation Aki-gun Hiroshima 730-8670 (JP)**

(72) Inventor: **YOSHIDA, Yuki Fuchu-cho, Aki-gun Hiroshima 730-8670 (JP)**

(74) Representative: **Müller-Boré & Partner Patentanwälte PartG mbB Friedenheimer Brücke 21 80639 München (DE)**

(56) References cited:
**EP-A2- 3 021 305**      **JP-A- 2007 233 864**
**JP-A- 2010 208 583**   **US-A1- 2018 118 202**
**US-B1- 9 770 987**

**Description**

BACKGROUND OF THE INVENTION

Field of the Invention

The present invention relates to an alarm system for a vehicle. In particular, it relates to an alarm system for a vehicle that raises an alarm in response to an object approaching the vehicle.

Description of the Related Art

Systems that raise an alarm in response to an object approaching have been proposed. For example, Japanese Patent Laid-Open No. 2012-160103 discloses a system that determines the possibility of an object located at the side of a vehicle colliding with the vehicle based on the distance between the object and the vehicle or the relative velocity of the object with respect to the vehicle. When the system determines that the object can collide with the vehicle, the system raises an alarm to the driver of the vehicle.

The system described in Japanese Patent Laid-Open No. 2012-160103 determines the stopping distance of each object existing around the vehicle (that is, the distance the object moves before the object is stopped). The system activates an alarm unit when the stopping distance of an object is greater than the distance between the object and the vehicle. Such a system has an advantage that the system can alert the driver to an object that is less conspicuous to the driver to avoid collision with the object.

The system described in Japanese Patent Laid-Open No. 2012-160103 determines that an object around the vehicle can collide with the vehicle and raises an alarm when the object satisfies a physical condition relating to collision. However, such a system can raise a false alarm when the physical condition does not accurately reflect the actual possibility of collision. That is, even when the object is actually unlikely to collide with the vehicle, such a system can raise an alarm, and such an alarm can irritate the driver.

JP 2007 233864 A relates to providing a technology for reducing driver distraction or trouble by changing contents of notification of dead angle support information according to relation with an obstacle such as a vehicle present in front of one's own vehicle, in a dead angle information notification device notifying a driver about the dead angle support information for supporting visual recognition to a dead angle of the own vehicle in a specific area.

US 9 770 987 B1 relates to an in-vehicle safety visualization system and method for coordinating driver alerts with a navigation system.

EP 3 021 305 A2 relates to an alerting apparatus which issues an alert regarding a moving obstacle to a driver of a host vehicle when the host vehicle enters an intersection of a crossroad that is connected to a traveling road on which the host vehicle is traveling, and the traveling road, in a left-hand traffic jurisdiction.

US 2018/118202 A1 relates to a vehicle control apparatus which acquires a relative position of an object to an own vehicle.

JP 2010 208583 A relates to a traveling support device which sets up an appropriate upper limit speed of a mobile object.

The present invention has been made to solve the problem described above, and an object of the present invention is to provide an alarm system for a vehicle that can reduce alarms that can irritate a driver.

SUMMARY OF THE INVENTION

To solve the problem described above, the present invention provides an alarm system for a vehicle, as defined in claim 1.

For example, consider a case where there is another vehicle ahead of the vehicle in a lane, and the other vehicle is stopped because a traffic light is emitting a stop signal. In such a case, the vehicle is to stop with a clearance between the vehicle and the other vehicle. The vehicle cannot start until the traffic light ceases emitting the stop signal and the other vehicle starts. Thus, when the vehicle is stopped, the possibility of an object around the vehicle colliding with the vehicle is lower than when the vehicle can start.

For this reason, with the arrangement described above, the distance determination part determines the distance between the vehicle and another vehicle ahead of the vehicle, and when the distance is equal to or smaller than the predetermined value, the alarm reduction control is performed to reduce operation of the alarm unit compared with when the distance is greater than the predetermined value. As a result, more alarms can be raised to the driver when the possibility of the object colliding with the vehicle is relatively high, whereas alarms that can irritate the driver can be reduced when the possibility of the object colliding with the vehicle is relatively low.

According to the present invention, preferably, the alarm unit includes a first alarm device and a second alarm device; the determination and alarm part activates the first alarm device and the second alarm device when the distance is greater than the predetermined value; and the determination and alarm part does not activate the first alarm device but activates the second alarm device as the alarm reduction control when the distance is equal to or smaller than the predetermined value.

With this arrangement, when the distance between the vehicle and the other vehicle is equal to or smaller than the predetermined value (that is, when the possibility of an object colliding with the vehicle is relatively low), the determination and alarm part does not activate the first alarm device, so that alarms that can irritate the driver can be reduced.

According to the present invention, preferably, the first alarm device audibly raises an alarm; and the second alarm device visually raises an alarm.

An audible alarm is more likely to irritate the driver than a visual alarm. With the arrangement described above, when the distance between the vehicle and the other vehicle is equal to or smaller than the predetermined value (that is, when the possibility of the object colliding with the vehicle is relatively low), the audible alarm is not raised, so that the driver is less likely to be irritated by alarms.

According to the present invention, the determination and alarm part sets a length of the alarm line at a first length when the distance is a first distance; and the determination and alarm part sets the length of the alarm line at a second length, which is shorter than the first length, as the alarm reduction control when the distance is a second distance, which is smaller than the first distance.

With this arrangement, when the distance between the vehicle and the other vehicle is the second distance, the alarm line is shorter than when the distance is the first distance. As a result, when the distance is relatively small, an object is less likely to be determined to cross the alarm line within the predetermined time than when the distance is relatively great. Therefore, the determination and alarm part reduces operation of the alarm unit when the distance is relatively small compared with when the distance is relatively great, so that alarms that can irritate the driver can be reduced.

Advantages of the Invention

The present invention can provide an alarm system for a vehicle that can reduce alarms that can irritate a driver.

BRIEF DESCRIPTION OF THE DRAWINGS

FIG. 1 is a block diagram showing an alarm system for a vehicle according to a first embodiment of the present invention;
FIG. 2 is a diagram for illustrating determination of collision performed by the alarm system for a vehicle shown in FIG. 1;
FIG. 3 is a diagram for illustrating determination of collision at a crosswalk;
FIG. 4 is a flowchart showing a process performed by an ECU shown in FIG. 1;
FIG. 5 is a flowchart showing a process performed by the ECU shown in FIG. 1;
FIG. 6 is a flowchart showing a process performed by an ECU of an alarm system for a vehicle according to a second embodiment; and
FIG. 7 is a flowchart showing a process performed by the ECU of the alarm system for a vehicle according to the second embodiment.

DETAILED DESCRIPTION OF THE PREFERRED EMBODIMENTS

In the following, embodiments will be described with reference to the accompanying drawings. To facilitate understanding of the description, the same components are denoted by like reference numerals throughout the drawings, and redundant descriptions thereof will be omitted.

[First Embodiment]

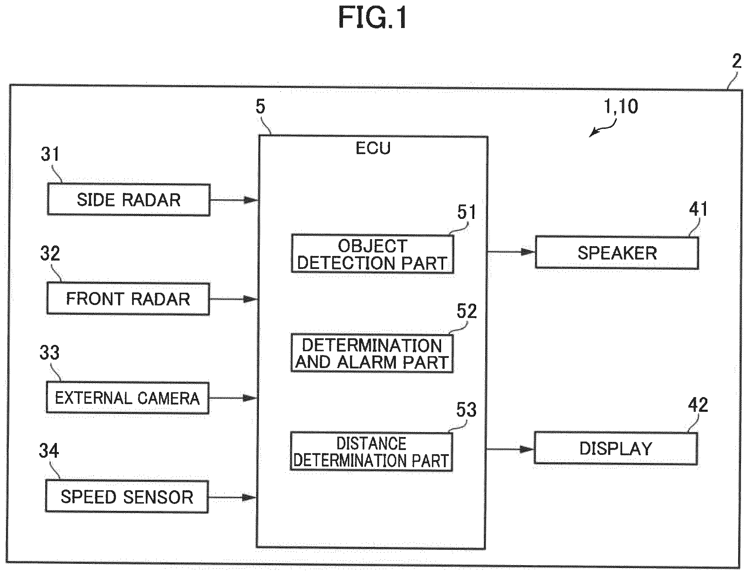

First, with reference to FIG. 1, a configuration of an alarm system 1 for a vehicle (referred to simply as an alarm system 1, hereinafter) according to a first embodiment will be described. FIG. 1 is a block diagram showing the alarm system 1.

The alarm system 1 is mounted on a vehicle and raises an alarm to the driver of the vehicle to alert the driver. In this specification, the vehicle on which the alarm system 1 is mounted will be referred to as a "vehicle 2". The alarm system for a vehicle according to the present invention can be applied not only to a four-wheeled vehicle but also to a two-wheeled vehicle.

In this specification, the direction in which the vehicle 2 runs forward is defined as "forward", and the direction in which the vehicle 2 runs backward is defined as "backward". The left side of the vehicle running forward is defined as "left", and the right side of the vehicle running forward is defined as "right".

The alarm system 1 includes a side radar 31, a front radar 32, an external camera 33, and a speed sensor 34. The alarm system 1 further includes a speaker 41, a display 42 and an electronic control unit (ECU) 5.

The side radar 31 is used to detect the presence of an object outside of the vehicle 2, the velocity of the object, and the distance between the object and an alarm line, which will be described later. Detectable objects include a vehicle, a structure fixed on a road, and a pedestrian, for example. The vehicle is not limited to a four-wheeled vehicle but may be any running body, such as a two-wheeled vehicle or a bicycle. As described later, the detections described above performed by the side radar 31 are targeted to an object in a detection region set at a side of the vehicle 2. The side radar 31 is a millimeter wave radar (which has an operating frequency of 76 GHz to 77 GHz), for example, and has antennas directed to the left and right of the vehicle 2. Each antenna may be a single antenna used for both transmission and reception or a set of a transmitting antenna element and a receiving antenna element. The side radar 31 transmits a measuring wave from the antennas to the sides of the vehicle 2 and receives a reflection wave from an object. The side radar 31 transmits a signal corresponding to the received reflection wave to the ECU 5.

The front radar 32 is disposed on a front surface of the vehicle 2, for example. The front radar 32 is used to detect the presence of an object in front of the vehicle 2, the velocity of the object, and the distance of the object from the vehicle 2. Detectable objects include a vehicle, a structure fixed on a road, and a pedestrian, for example. The front radar 32 transmits a measuring wave from an antenna in the forward direction of the vehicle 2 and receives a reflection wave from an object. The front radar 32 transmits a signal corresponding to the received reflection wave to the ECU 5.

The external camera 33 takes an image of a range including the detection region of the side radar 31 and the front radar 32 and obtains image information. The external camera 33 is an image sensor, for example, and is installed on a rear view mirror (not shown) or the like of the vehicle 2. The external camera 33 transmits a signal corresponding to the obtained image information.

The speed sensor 34 detects the velocity of the vehicle 2. The speed sensor 34 determines the velocity of the vehicle 2 based on the rotational speed of a wheel (not shown) of the vehicle 2, the engine speed or the like, and transmits a signal corresponding to the velocity to the ECU 5.

The speaker 41 and the display 42 are examples of alarm devices of an alarm unit according to the present invention. More specifically, the speaker 41 is an example of a first alarm device according to the present invention, and the display 42 is an example of a second alarm device according to the present invention. The speaker 41 operates based on a received control signal and raises an alarm by outputting an alarm or other sound. The display 42 is a liquid crystal panel, for example. The display 42 operates based on a received control signal and raises an alarm by displaying a picture, text or the like.

The ECU 5 is a controller that controls equipment by transmitting and receiving signals. The ECU 5 may be partially or wholly formed by an analog circuit or formed as a digital processor. The ECU 5 includes an object detection part 51, a determination and alarm part 52, and a distance determination part 53.

FIG. 1 shows functions of the ECU 5 in the form of blocks. However, the analog circuit or the software module incorporated in the digital processor of the ECU 5 is not necessarily divided as shown in FIG. 1. That is, the functional blocks shown in FIG. 1 may be further divided, or some of the functional blocks may be integrated into a single functional block. Those skilled in the art can modify the internal configuration of the ECU 5 as appropriate, as far as the processes described later can be performed.

The object detection part 51 detects the direction of movement of an object outside the vehicle 2, the distance of the object from an alarm line, the relative velocity of the object with respect to the alarm line, and the relative acceleration of the object with respect to the alarm line. Specifically, the object detection part 51 performs a predetermined calculation based on a signal received from the side radar 31 and performs the detections based on the calculation result.

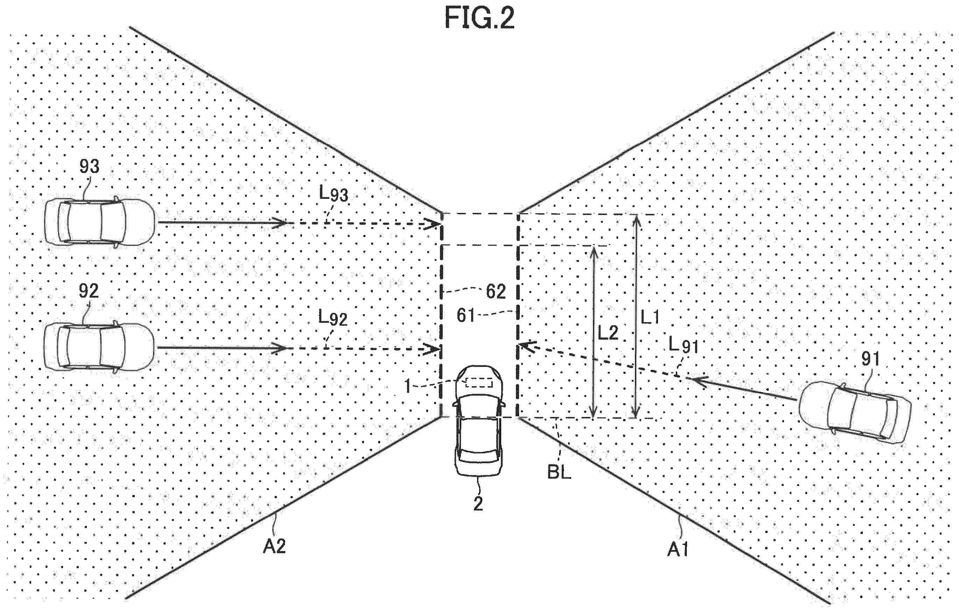

The determination and alarm part 52 sets an alarm line. The alarm line is a virtual line set in the vicinity of the vehicle 2, which is used for determination of collision. The alarm line will be described in more detail later.
The determination and alarm part 52 also performs determination of collision. In determination of collision, it is determined whether or not an object outside the vehicle 2 will cross the alarm line within a predetermined time. The determination of collision will be described in more detail later.
The determination and alarm part 52 further transmits a control signal to the speaker 41 or the display 42 based on the result of the determination of collision. Specifically, the determination and alarm part 52 transmits a control signal to activate the speaker 41 or the display 42 when the determination and alarm part 52 determines that the object can collide with the vehicle 2.
The distance determination part 53 determines the distance between the vehicle 2 and another vehicle stopped ahead of the vehicle 2. Specifically, the distance determination part 53 performs a predetermined calculation based on a signal received from the front radar 32 or the external camera 33, and determines the distance based on the calculation result.
Next, with reference to FIG. 2, the determination of collision performed by the alarm system 1 will be described. FIG. 2 is a diagram for illustrating the determination of collision performed by the alarm system 1.
When the vehicle 2 is stopped or running at a relatively low velocity (10 km/h or less, for example), the determination and alarm part 52 (see FIG. 1) of the ECU 5 sets a right alarm line 61 and a left alarm line 62, as shown in FIG. 2. The right alarm line 61 and the left alarm line 62 are invisible virtual lines. The right alarm line 61 is set at a predetermined distance (1 m or less, for example) in the right direction from the right edge of the vehicle 2, and the left alarm line 62 is set at a predetermined distance (1 m or less, for example) in the left direction from the left edge of the vehicle 2. That is, the distance between the right alarm line 61 and the left alarm line 62 is greater than the width of the vehicle 2.
The right alarm line 61 and the left alarm line 62 extend in the forward direction of the vehicle 2 from a base line BL as a base end. The base line BL is a virtual line set rearward from the front edge of the vehicle 2 by a predetermined distance (2 m, for example). The right alarm line 61 and the left alarm line 62 extend straight substantially in parallel with each other in the longitudinal direction of the vehicle 2.
The object detection part 51 (see FIG. 1) of the ECU 5 sets a detection region A1 at the right side of the right alarm line 61, and a detection region A2 at the left side of the left alarm line 62. The detection region A1 is defined by the right alarm line 61, a line at a predetermined distance in the right direction from the right alarm line 61, and lines extending from the right alarm line 61 at approximately 135° with respect to the right alarm line 61. The detection region A2 is defined by the left alarm line 62, a line at a predetermined distance in the left direction from the left alarm line 62, and lines extending from the left alarm line 62 at approximately 135° with respect to the left alarm line 62. The object detection part 51 detects an object in the detection regions A1 and A2 based on the signal received from the side radar 31.

In the following, the determination of collision of another vehicle 91 in the detection region A1 approaching the vehicle 2 will be described. When a virtual line $L_{91}$ extending in the direction of movement of the other vehicle 91 intersects with the right alarm line 61, the determination and alarm part 52 of the ECU 5 calculates a time to collision (TTC) for the other vehicle 91 with respect to the right alarm line 61 based on information detected by the object detection part 51. In general, the TTC is expressed by the following formula f1 provided that the distance between relevant objects is defined as $L_0$, and the relative velocity between the objects is defined as Vo. The relative velocity $V_0$ of the object is positive when the object is approaching the alarm line. The formula f1 is derived from the equation of motion on the condition that the object is moving at a constant velocity.

[Formula 1]

$$TTC = \frac{L_0}{V_0} \quad \cdot \cdot \cdot (f1)$$

The determination and alarm part 52 determines whether or not the other vehicle 91 will cross the right alarm line 61 within a predetermined time based on the calculated TTC. Specifically, when the TTC is equal to or less than a preset threshold (2 seconds, for example), the determination and alarm part 52 determines that the other vehicle 91 will cross the right alarm line 61 within a predetermined time (2 seconds, for example). Then, the other vehicle 91 can collide with the vehicle 2.

As described above, the alarm system 1 determines whether the object at the right side of the vehicle 2 can collide with the vehicle 2 or not with respect to the right alarm line 61. Similarly, the alarm system 1 determines whether the object at the left side of the vehicle 2 can collide with the vehicle 2 or not with respect to the left alarm line 62.

The determination and alarm part 52 can set the length of the right alarm line 61 and the left alarm line 62 at L1 (7 m, for example). L1 is an example of a first length according to the present invention. The determination and alarm part 52 can also set the length of the right alarm line 61 and the left alarm line 62 at L2 (5 m, for example), which is shorter than L1 (that is, L2 < L1). L2 is an example of a second length according to the present invention.

Such a change in length of the right alarm line 61 and the left alarm line 62 has an effect on the determination of collision. As an example, the determination of collision in a case where other vehicles 92 and 93 in the detection region A2 are approaching the left alarm line 62 will be described. When the length of the left alarm line 62 is set at L1, both virtual lines $L_{92}$ and $L_{93}$ extending in the direction of traveling of the other vehicles 92 and 93 intersect with the left alarm line 62. Therefore, the determination and alarm part 52 performs the determination of collision of the other vehicles 92 and 93.

However, when the length of the left alarm line 62 is set at L2, the virtual line $L_{93}$ extending in the direction of traveling of the other vehicle 93 does not intersect with the left alarm line 62. Therefore, the determination and alarm part 52 does not perform the determination of collision of the other vehicle 93 and performs only the determination of collision of the other vehicle 92. That is, the determination and alarm part 52 does not activate the speaker 41 or the display 42 (see FIG. 1) in response to the other vehicle 93 approaching.

The alarm system 1 configured described above is particularly advantageous in a situation where there is a blind spot for the driver of the vehicle 2. An example of the situation where there is a blind spot for the driver is a situation where there is a wall near the lane in which the vehicle is running or a situation where there is another vehicle parked around the vehicle 2. That is, when an object in the blind spot is approaching the vehicle 2 and can collide with the vehicle 2, at least one of the speaker 41 and the display 42 raises an alarm to alert the driver to the object so that the driver can operate the vehicle to avoid collision.

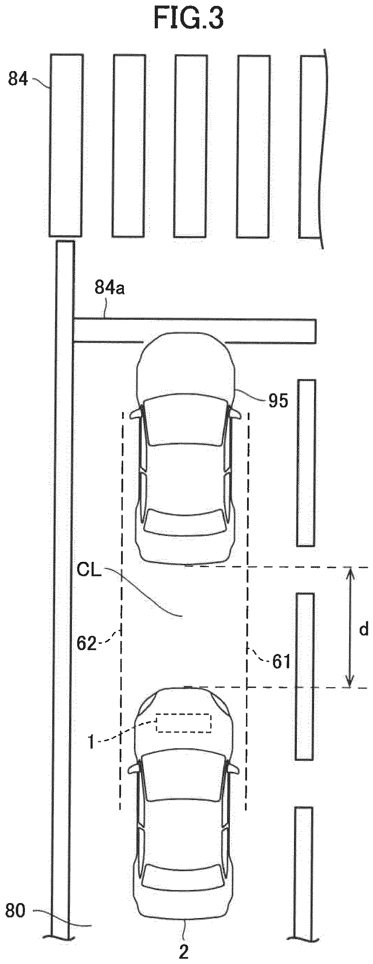

Next, with reference to FIG. 3, determination of collision at a crosswalk will be described. FIG. 3 is a diagram for illustrating determination of collision at a crosswalk 84.

Consider a case where there is another vehicle 95 ahead of the vehicle 2 in the lane 80 as shown in FIG. 3. When the vehicle 2 approaches the other vehicle 95 from behind, and the velocity of the vehicle 2 becomes relatively low, the alarm system 1 sets the right alarm line 61 and the left alarm line 62. When a crosswalk 84 is provided across the lane 80, and the other vehicle 95 is stopped at a stop line 84a, the vehicle 2 is stopped with a clearance CL between the vehicle 2 and the other vehicle 95.

In such a situation, for example, an object such as a pedestrian or a bicycle may approach the vehicle 2 to pass through the clearance CL, and the virtual line in the direction of movement of the object may cross the right alarm line 61 or the left alarm line 62. Then, the alarm system 1 calculates the TTC for the object. When the TTC is equal to or less than the threshold, the alarm system 1 determines that the object can cross the right alarm line 61 or the left alarm line 62 within the predetermined time, that is, the object can collide with the vehicle 2, and raises an alarm to the driver of the vehicle 2.

However, such an approach of the object to the vehicle 2 is not due to an operation by the driver of the vehicle 2 and does not necessarily lead to collision of the object with the vehicle 2 with high possibility. Furthermore, the vehicle 2 cannot start until the other vehicle 95 starts after the pedestrian finishes crossing the crosswalk 84 or the traffic light (not shown) ceases emitting the stop signal. When the alarm system 1 raises an alarm concerning the object in such a situation, the alarm can only irritate the driver of the vehicle 2, who cannot do anything to avoid collision. Thus, when a distance d between the vehicle 2 and the other vehicle 95 is equal to or smaller than a predetermined value, the alarm system 1 performs the alarm reduction control to reduce operation of the alarm unit compared with when the distance d is greater than the predetermined value.

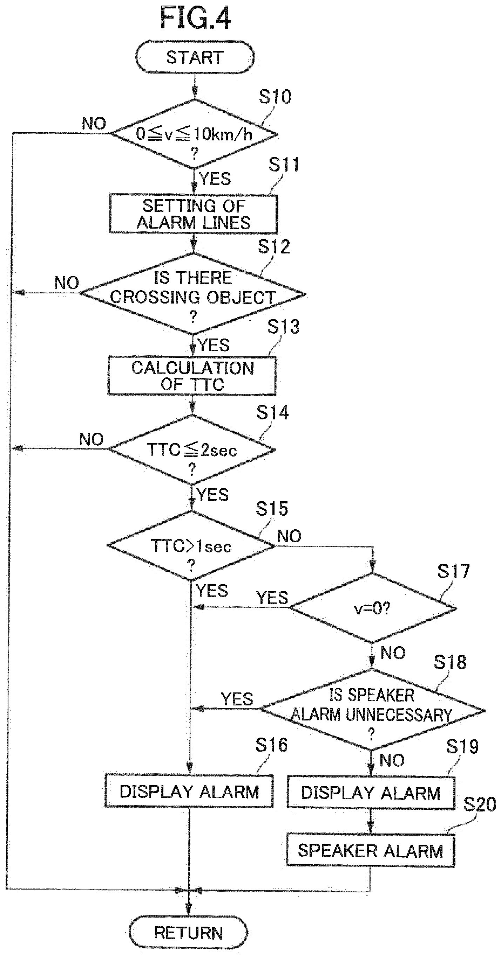

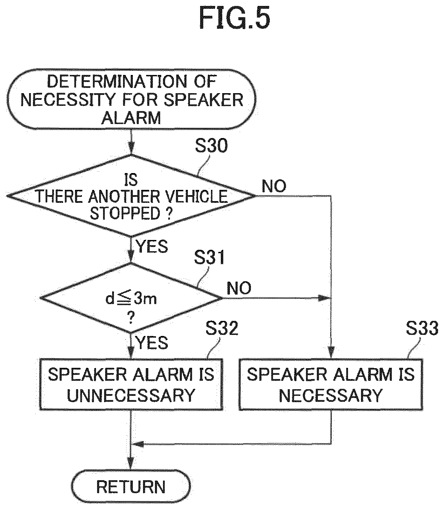

Next, with reference to FIGS. 4 and 5, the alarm reduction control will be described. FIGS. 4 and 5 are flowcharts showing processes performed by the ECU 5 (see FIG. 1). The processes are repeatedly performed at a predetermined period. In the following description, for ease of explanation, any processing that is performed by a functional block of the ECU 5 in a strict sense will be described as being performed by the ECU 5.

First, in Step S10 shown in FIG. 4, the ECU 5 determines whether or not the velocity v of the vehicle 2 falls within a range from 0 km/h to 10 km/h inclusive. The ECU 5 determines the velocity v of the vehicle 2 based on the signal received from the speed sensor 34 (see FIG. 1). When it is determined that the velocity v falls within the range (YES in Step S10), the ECU 5 proceeds to Step S11.

In Step S11, the ECU 5 sets the right alarm line 61 and the left alarm line 62 (see FIG. 2). In this step, the ECU 5 sets the length of both the right alarm line 61 and the left alarm line 62 at L1. After completing setting of the right alarm line 61 and the left alarm line 62, the ECU 5 proceeds to Step S12.

In Step S12, the ECU 5 determines whether or not, in the detection region A1 or the detection region A2 (see FIG. 2), there is an object (referred to simply as a "crossing object", hereinafter) whose virtual line extending in the direction of traveling thereof intersects with the right alarm line 61 or the left alarm line 62. The ECU 5 performs the determination based on the signal received from the side radar 31 (see FIG. 1). When it is determined that there is a crossing object (YES in Step S12), the ECU 5 proceeds to Step S13.

In Step S13, the ECU 5 calculates the TTC for the crossing object. The ECU 5 calculates the distance from the right alarm line 61 or the left alarm line 62 to the crossing object and the velocity of the crossing object with respect to the alarm line (that is, the relative velocity) based on the signal received from the side radar 31. The ECU 5 further calculates the TTC according to the formula f1 described above. When a plurality of crossing objects are detected, the ECU 5 calculates the TTC for each crossing object. After completing calculation of the TTC, the ECU 5 proceeds to Step S14.

In Step S14, the ECU 5 determines whether or not the TTC calculated in Step S13 is equal to or less than 2 seconds. When it is determined that the TTC is equal to or less than 2 seconds (YES in Step S14), the ECU 5 proceeds to Step S15.

In Step S15, the ECU 5 determines whether or not the TTC calculated in Step S13 is more than 1 second. When the TTC is more than 1 second, the necessity for alarm is relatively low. When it is determined that the TTC is more than 1 second (YES in Step S15), the ECU 5 proceeds to Step S16.

In Step S16, the ECU 5 activates the display 42 (see FIG. 1). Specifically, the ECU 5 transmits a control signal to the display 42, and in response to the control signal, the display 42 provides an indication that an object outside the vehicle 2 can collide with the vehicle 2. After making the display 42 display the alarm, the ECU 5 ends the process. That is, when the TTC is equal to or less than 2 seconds (YES in Step S14) and more than 1 second (YES in Step S15), the necessity for alarm is relatively low, so that the ECU 5 does not activate the speaker 41 (see FIG. 1) but activates the display 42 to raise an alarm to the driver of the vehicle 2.

On the other hand, when the TTC is equal to or less than 1 second, the necessity for alarm is relatively high. When it is determined in Step S15 that the TTC calculated in Step S13 is not more than 1 second (NO in Step S15), the ECU 5 proceeds to Step S17.

In Step S17, the ECU 5 determines whether or not the velocity v of the vehicle 2 is 0 km/h. In other words, the ECU 5 determines whether or not the vehicle 2 is stopped. When the vehicle 2 is stopped, the necessity for alarm is relatively low compared with when the vehicle 2 is running. Therefore, when it is determined that the velocity v of the vehicle 2 is 0 km/h (YES in Step S17), the ECU 5 proceeds to Step S16. As described above, in Step S16, the ECU 5 makes the display 42 display an alarm and ends the process. That is, when the TTC is equal to or less than 1 second (NO in Step S15), and the vehicle 2 is stopped (YES in Step S17), the ECU 5 does not activate the speaker 41 but activates the display 42 to raise an alarm to the driver of the vehicle 2.

On the other hand, when it is determined in Step S17 that the velocity v of the vehicle 2 is not 0 km/h (NO in Step S17), or in other words, when the vehicle 2 is not stopped, the ECU 5 proceeds to Step S18.

When the vehicle 2 is not stopped, the necessity for alarm is higher than when the vehicle 2 is stopped. In Step S18, the ECU 5 determines whether or not the alarm from the speaker 41 is necessary. With reference to FIG. 5, a process of the ECU 5 determining the necessity will be described.

In Step S30 shown in FIG. 5, the ECU 5 determines whether or not there is another vehicle stopped ahead of the vehicle 2 in the lane. The ECU 5 performs the determination based on the signal received from the front radar 32 (see FIG. 1). When it is determined that there is a vehicle stopped ahead of the vehicle 2 (YES in Step S30), the ECU 5 proceeds to Step S31.

In Step S31, the ECU 5 determines whether or not the distance d (see FIG. 3) between the vehicle 2 and the other vehicle is equal to or smaller than 3 m. The value "3 m" is an example of a predetermined value according to the present invention. The ECU 5 performs the determination based on the signal received from the front radar 32 or the external camera 33 (see FIG. 1). When the distance d is equal to or smaller than 3 m, the possibility of the vehicle 2 being to stop is considered high. When it is determined that the distance d is equal to or smaller than 3 m (YES in Step S31), the ECU 5 proceeds to Step S32. In Step S32, the ECU 5 determines that an alarm from the speaker 41 is unnecessary.

On the other hand, when it is determined in Step S30 that there is no vehicle stopped ahead of the vehicle 2 (NO in Step S30), or when it is determined in Step S31 that the distance d between the vehicle 2 and the other vehicle is not equal to or smaller than 3 m (NO in Step S31), the ECU 5 proceeds to Step S33. In Step S33, the ECU 5 determines that the alarm from the speaker 41 is necessary.

Referring to FIG. 4 again, the process performed by the ECU 5 will be described. When it is determined in Step S18 that the alarm from the speaker 41 is unnecessary (YES in Step S18), the ECU 5 proceeds to Step S16.

In Step S16, the ECU 5 activates the display 42. Specifically, the ECU 5 transmits a control signal to the display 42, and in response to the control signal, the display 42 provides an indication that an object outside the vehicle 2 can collide with the vehicle 2. After making the display 42 display the alarm, the ECU 5 ends the process. That is, when the TTC is equal to or less than 1 second (NO in Step S15) and the distance d between the vehicle 2 and the other vehicle is equal to or smaller than 3 m, the ECU 5 does not activate the speaker 41 but activates the display 42.

On the other hand, when it is determined in Step S18 that the alarm from the speaker 41 is necessary (NO in Step S18), the ECU 5 proceeds to Step S19.

When the TTC is equal to or less than 1 second (NO in Step S15), and the distance d between the vehicle 2 and another vehicle is greater than 3 m, the necessity for alarm is relatively high. Then, the ECU 5 activates the display 42 to display an alarm in Step S19, and activates the speaker 41 to produce an alarm or other sound in Step S20.

According to the first embodiment, the control of suppressing operation of the speaker 41 when the distance d is equal to or smaller than 3 m compared with when the distance d is greater than 3 m as described above is referred to as the "alarm reduction control".

When it is determined in Step S10 that the velocity v of the vehicle 2 does not fall within the predetermined range (NO in Step S10), when it is determined in Step S12 that there is no crossing object (NO in Step S12), or when it is determined in Step S14 that the TTC is not equal to or less than 2 seconds (NO in Step S14), the ECU 5 activates neither the display 42 nor the speaker 41 and ends the process.

[Effects and Advantages]

With the alarm system 1, the distance determination part 53 determines the distance d between the vehicle 2 and another vehicle ahead of the vehicle 2. When the distance d is equal to or smaller than 3 m, the alarm system 1 performs the alarm reduction control to reduce operation of the alarm unit compared with when the distance d is greater than 3 m. As a result, more alarms can be raised to the driver of the vehicle 2 when the possibility of the object colliding with the vehicle 2 is relatively high, whereas alarms that can irritate the driver can be reduced when the possibility of the object colliding with the vehicle 2 is relatively low.

The alarm unit includes the speaker 41, which is the first alarm device, and the display 42, which is the second alarm device. The determination and alarm part 52 activates the speaker 41 and the display 42 when the distance d is greater than 3 m. The determination and alarm part 52 does not activate the speaker 41 but activates the display 42 as the alarm reduction control when the distance d is equal to or smaller than 3 m.

With this arrangement, when the distance d between the vehicle 2 and the other vehicle is equal to or smaller than 3 m (that is, when the possibility of an object colliding with the vehicle 2 is relatively low), the determination and alarm part 52 does not activate the speaker 41, so that alarms that can irritate the driver can be reduced.

The speaker 41, which is the first alarm device, raises an audible alarm. The display 42, which is the second alarm device, raises a visual alarm.

The audible alarm is more likely to irritate the driver than the visual alarm. With the arrangement described above, when the distance d between the vehicle 2 and the other vehicle is equal to or smaller than 3 m (that is, the possibility of an object colliding with the vehicle 2 is relatively low), the audible alarm is not raised, so that the driver is less likely to be irritated by alarms.

According to the first embodiment, of the speaker 41 and the display 42, operation of the speaker 41 is suppressed. However, the reduction of operation of the alarm unit according to the present invention is not limited to this implementation. For example, the reduction of operation of the alarm unit may include changing the volume or pattern of the audible alarm or the color or contents of the visual alarm to reduce irritation to the driver. Furthermore, the alarm unit may be a vibrator that makes the steering wheel or driver's seat in the vehicle vibrate to alert the driver. In that case, as the reduction of operation of the alarm unit, the strength or pattern of the vibration may be changed to reduce irritation to the driver, for example.

[Second Embodiment]

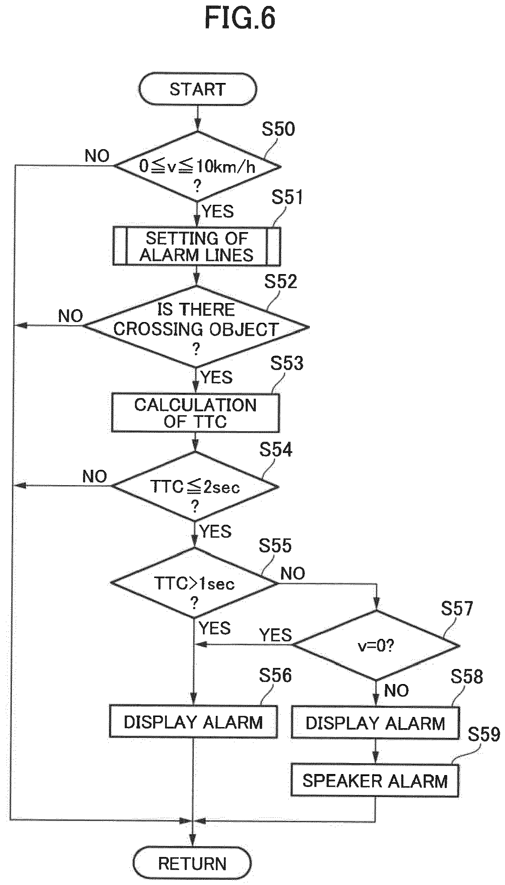

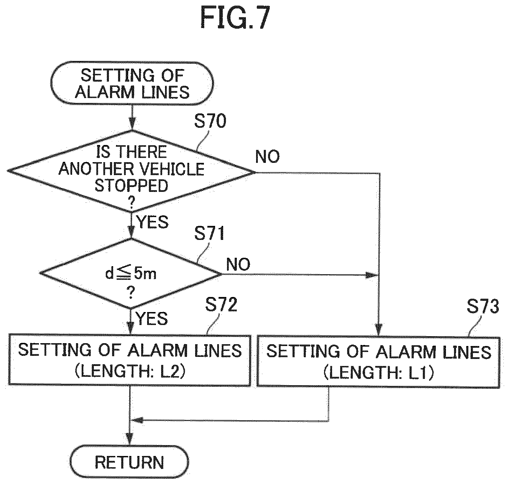

Next, with reference to FIGS. 6 and 7, an alarm system 10 for a vehicle (referred to simply as an "alarm system 10", hereinafter. See FIG. 1) according to a second embodiment will be described. FIGS. 6 and 7 are flowcharts showing processes performed by the ECU 5 of the alarm system 10 according to the second embodiment.

As with the alarm system 1 according to the first embodiment described above, the alarm system 10 according to the second embodiment is a system that raises an alarm to the driver of the vehicle 2 to alert the driver. Although the alarm system 10 differs from the alarm system 1 according to the first embodiment in the way of setting the alarm lines, the alarm system 10 has basically the same configuration as the alarm system 1 according to the first embodiment shown in FIG. 1. Of the components of the alarm system 10 and the controls performed by the alarm system 10, those that are the same as those in the first embodiment are denoted by the same reference numerals, and descriptions thereof will be omitted as appropriate.

In Step S50 shown in FIG. 6, the ECU 5 determines whether or not the velocity v of the vehicle 2 falls within a range from 0 km/h to 10 km/h inclusive. The ECU 5 determines the velocity v of the vehicle 2 based on the signal received from the speed sensor 34 (see FIG. 1). When it is determined that the velocity v falls within the range (YES in Step S50), the ECU 5 proceeds to Step S51.

In Step S51, the ECU 5 sets the alarm lines. With reference to FIG. 7, a process of the ECU 5 setting the alarm lines will be described.

In Step S70 shown in FIG. 7, the ECU 5 determines whether or not there is another vehicle stopped ahead of the vehicle 2 in the lane. The ECU 5 performs the determination based on the signal received from the front radar 32 (see FIG. 1). When it is determined that there is a vehicle stopped ahead of the vehicle 2 (YES in Step S70), the ECU 5 proceeds to Step S71.

In Step S71, the ECU 5 determines whether or not the distance d (see FIG. 3) between the vehicle 2 and the other vehicle is equal to or smaller than 5 m. The value "5 m" is an example of the predetermined value according to the present invention. The ECU 5 performs the determination based on the signal received from the front radar 32 or the external camera 33 (see FIG. 1). When it is determined that the distance d is equal to or smaller than 5 m (YES in Step S71), the ECU 5 proceeds to Step S72. In Step S72, the ECU 5 sets the length of the right alarm line 61 and the left alarm line 62 at L2 (see FIG. 2).

On the other hand, when it is determined in Step S70 that there is no vehicle stopped ahead of the vehicle 2 (NO in Step S70) or when it is determined in Step S71 that the distance d is not equal to or smaller than 5 m (NO in Step S71), the ECU 5 proceeds to Step S73. In Step S73, the ECU 5 sets the length of the right alarm line 61 and the left alarm line 62 at L1 (see FIG. 2).

According to the second embodiment, the control of setting the length of the right alarm line 61 and the left alarm line 62 at L2 when the distance d is relatively small performed by the determination and alarm part 52 of the ECU 5 is referred to as the "alarm reduction control".

Referring to FIG. 6 again, the process performed by the ECU 5 will be described. After completing setting of the right alarm line 61 and the left alarm line 62 in Step S51, the ECU 5 proceeds to Step S52.

In Step S52, the ECU 5 determines whether or not, in the detection region A1 or the detection region A2 (see FIG. 2), there is an object (referred to simply as a "crossing object", hereinafter) whose virtual line extending in the direction of traveling thereof intersects with the right alarm line 61 or the left alarm line 62. The ECU 5 performs the determination based on the signal received from the side radar 31 (see FIG. 1). When it is determined that there is a crossing object (YES in Step S52), the ECU 5 proceeds to Step S53.

In Step S53, the ECU 5 calculates the TTC for the crossing object. The ECU 5 calculates the distance between the crossing object and the right alarm line 61 or the left alarm line 62 and the velocity of the crossing object with respect to the alarm line (that is, the relative velocity) based on the signal received from the side radar. Unlike the first embodiment, the ECU 5 further calculates the TTC according to the formula f1 described above. When a plurality of crossing objects are detected, the ECU 5 calculates the TTC for each crossing object. After completing calculation of the TTC, the ECU 5 proceeds to Step S54.

In Step S54, the ECU 5 determines whether or not the TTC calculated in Step S53 is equal to or less than 2 seconds. When it is determined that the TTC is equal to or less than 2 seconds (YES in Step S54), the ECU 5 proceeds to Step S55.

In Step S55, the ECU 5 determines whether or not the TTC calculated in Step S53 is more than 1 second. When the TTC is more than 1 second, the necessity for alarm is relatively low. When it is determined that the TTC is more than 1 second (YES in Step S55), the ECU 5 proceeds to Step S56.

In Step S56, the ECU 5 activates the display 42 (see FIG. 1). Specifically, the ECU 5 transmits a control signal to the display 42, and in response to the control signal, the display 42 provides an indication that an object outside the vehicle 2 can collide with the vehicle 2. After making the display 42 display the alarm, the ECU 5 ends the process. That is, when the TTC is equal to or less than 2 seconds (YES in Step S54) and more than 1 second (YES in Step S55), the necessity for alarm is relatively low, so that the ECU 5 does not activate the speaker 41 (see FIG. 1) but activates the display 42 to raise an alarm to the driver of the vehicle 2.

On the other hand, when the TTC is equal to or less than 1 second, the necessity for alarm is relatively high. When it is determined in Step S55 that the TTC calculated in Step S53 is not more than 1 second (NO in Step S55), the ECU 5 proceeds to Step S57.

In Step S57, the ECU 5 determines whether or not the velocity v of the vehicle 2 is 0 km/h. In other words, the ECU 5 determines whether or not the vehicle 2 is stopped. When the vehicle 2 is stopped, the necessity for alarm is relatively low compared with when the vehicle 2 is running. Therefore, when it is determined that the velocity v of the vehicle 2 is 0 km/h (YES in Step S57), the ECU 5 proceeds to Step S56. As described above, in Step S56, the ECU 5 makes the display 42 display an alarm and ends the process. That is, when the TTC is equal to or less than 1 second (NO in Step S55), and the vehicle 2 is stopped (YES in Step S57), the ECU 5 does not activate the speaker 41 but activates the display 42 to raise an alarm to the driver of the vehicle 2.

On the other hand, when it is determined in Step S57 that the velocity v of the vehicle 2 is not 0 km/h (NO in Step S57), or in other words, when the vehicle 2 is not stopped, the ECU 5 proceeds to Step S58.

When the vehicle 2 is not stopped, the necessity for alarm is higher than when the vehicle 2 is stopped. In Step S58, the ECU 5 activates the display 42 to display an alarm and activates the speaker 41 to raise an alarm by producing an alarm or other sound in Step S59. That is, when the TTC is equal to or less than 1 second (NO in Step S55), and the vehicle 2 is not stopped (NO in Step S57), the ECU 5 activates the display 42 and the speaker 41 to raise more alarms to the driver of the vehicle 2.

When it is determined in Step S50 that the velocity v of the vehicle 2 does not fall within the predetermined range (NO in Step S50), when it is determined in Step S52 that there is no crossing object (NO in Step S52), or when it is determined in Step S54 that the TTC is not equal to or less than 2 seconds (NO in Step S54), the ECU 5 activates neither the display 42 nor the speaker 41 and ends the process.

[Effects and Advantages]

When the distance d is greater than 5 m, the determination and alarm part 52 sets the length of the right alarm line 61 and the left alarm line 62 at L1. When the distance d is equal to or smaller than 5 m, the determination and alarm part 52 sets the length of the right alarm line 61 and the left alarm line 62 at L2, which is smaller than L1.

With this arrangement, when the distance d between the vehicle 2 and the other vehicle is relatively small, the right alarm line 61 and the left alarm line 62 are shorter than when the distance d is relatively great. As a result, when the distance d is relatively small, an object is less likely to be determined to cross the right alarm line 61 or the left alarm line 62 within the predetermined time than when the distance d is relatively great.

Therefore, the determination and alarm part 52 reduces operation of the alarm unit when the distance d is relatively small compared with when the distance d is relatively great, so that alarms that can irritate the driver can be reduced.

According to the second embodiment, the length of the right alarm line 61 and the left alarm line 62 is changed in two steps with respect to 5 m as a threshold. However, the way of changing the length of the alarm lines according to the present invention is not limited to this implementation. For example, the length of the alarm lines may be changed in proportion to the distance between the vehicle and another vehicle or increased stepwise as the distance between the vehicle and another vehicle increases.

Reference Signs List

| | |
|---|---|
| 1, 10 | alarm system for vehicle (alarm system) |
| 2 | vehicle |
| 41 | speaker (first alarm device) |
| 42 | display (second alarm device) |
| 51 | object detection part |
| 52 | determination and alarm part |
| 53 | distance determination part |
| 61 | right alarm line (alarm line) |
| 62 | left alarm line (alarm line) |

**Claims**

1.  An alarm system (1; 10) for a vehicle (2), comprising:

    an object detection part (51) configured to detect an object around the vehicle (2),
    a determination and alarm part (52) configured to set an alarm line (61, 62) extending forward from the vehicle (2), to determine whether or not the object crosses the alarm line (61, 62) within a predetermined time, and to activate an alarm unit when the determination and alarm part (52) determines that the object crosses the alarm line (61, 62) within the predetermined time; and
    a distance determination part (53) configured to determine a distance between the vehicle (2) and another vehicle stopped ahead of the vehicle (2) in a lane,
    wherein,
    the determination and alarm part (52) is configured to perform, when the distance is equal to or smaller than a predetermined value, an alarm reduction control to reduce operation of the alarm unit compared with when the distance is greater than the predetermined value,
    the determination and alarm part (52) is configured to set a length of the alarm line (61, 62) at a first length when the distance is a first distance, and

the determination and alarm part (52) is configured to set the length of the alarm line (61, 62) at a second length, which is shorter than the first length, as the alarm reduction control when the distance is a second distance, which is smaller than the first distance.

2. The alarm system (1; 10) for a vehicle (2) according to claim 1, wherein the alarm unit includes a first alarm device (41) and a second alarm device (42);

the determination and alarm part (52) is configured to activate the first alarm device (41) and the second alarm device (42) when the distance is greater than the predetermined value; and the determination and alarm part (52) is configured not to activate the first alarm device (41) but to activate the second alarm device (42) as the alarm reduction control when the distance is equal to or smaller than the predetermined value.

3. The alarm system (1; 10) for a vehicle (2) according to claim 2, wherein the first alarm device (41) is configured to audibly raise an alarm; and the second alarm device (42) is configured to visually raise an alarm.

**Patentansprüche**

1. Alarmsystem (1; 10) für ein Fahrzeug (2), umfassend:

einen Objekterkennungsteil (51), der konfiguriert ist, ein Objekt um das Fahrzeug (2) herum zu erkennen, einen Bestimmungs- und Alarmteil (52), der konfiguriert ist, eine Alarmlinie (61, 62), die sich von dem Fahrzeug (2) nach vorne erstreckt, festzulegen bzw. einzustellen, um zu bestimmen, ob das Objekt die Alarmlinie (61, 62) innerhalb einer vorbestimmten Zeit kreuzt oder nicht, und eine Alarmeinheit zu aktivieren, wenn der Bestimmungs- und Alarmteil (52) bestimmt, dass das Objekt die Alarmlinie (61, 62) innerhalb der vorbestimmten Zeit kreuzt; und einen Abstandsbestimmungsteil (53), der konfiguriert ist, einen Abstand zwischen dem Fahrzeug (2) und einem anderen Fahrzeug zu bestimmen, das vor dem Fahrzeug (2) auf einer Spur gestoppt wird, wobei der Bestimmungs- und Alarmteil (52) konfiguriert ist, wenn der Abstand gleich oder kleiner als ein vorbestimmter Wert ist, eine Alarmreduzierungssteuerung bzw. -regelung durchzuführen, um den Betrieb der Alarmeinheit im Vergleich dazu zu reduzieren, wenn der Abstand größer als der vorbestimmte Wert ist, der Bestimmungs- und Alarmteil (52) konfiguriert ist, eine Länge der Alarmlinie (61, 62) auf eine erste Länge festzulegen bzw. einzustellen, wenn der Abstand ein erster Abstand ist, und der Bestimmungs- und Alarmteil (52) konfiguriert ist, die Länge der Alarmlinie (61, 62) auf eine zweite Länge, die kürzer als die erste Länge ist, als die Alarmreduktionssteuerung bzw. -regelung festzulegen bzw. einzustellen, wenn der Abstand ein zweiter Abstand ist, der kleiner als der erste Abstand ist.

2. Alarmsystem (1; 10) für ein Fahrzeug (2) nach Anspruch 1, wobei die Alarmeinheit eine erste Alarmvorrichtung (41) und eine zweite Alarmvorrichtung (42) enthält;

der Bestimmungs- und Alarmteil (52) konfiguriert ist, die erste Alarmvorrichtung (41) und die zweite Alarmvorrichtung (42) zu aktivieren, wenn der Abstand größer als der vorbestimmte Wert ist; und der Bestimmungs- und Alarmteil (52) konfiguriert ist, die erste Alarmvorrichtung (41) nicht zu aktivieren, sondern die zweite Alarmvorrichtung (42) als die Alarmreduzierungssteuerung bzw. -regelung zu aktivieren, wenn der Abstand gleich oder kleiner als der vorbestimmte Wert ist.

3. Alarmsystem (1; 10) für ein Fahrzeug (2) nach Anspruch 2, wobei die erste Alarmvorrichtung (41) konfiguriert ist, hörbar einen Alarm auszulösen; und die zweite Alarmvorrichtung (42) konfiguriert ist, visuell einen Alarm auszulösen.

**Revendications**

1. Système d'alarme (1 ; 10) destiné à un véhicule (2), comprenant :

une partie de détection d'objet (51) configurée pour détecter un objet autour du véhicule (2), une partie de détermination et d'alarme (52) configurée pour régler une ligne d'alarme (61, 62) s'étendant vers l'avant depuis le véhicule (2), pour déterminer si l'objet croise la ligne d'alarme (61, 62) au sein d'une durée prédéterminée ou non, et pour activer une unité d'alarme lorsque la partie de détermination et d'alarme (52) détermine que l'objet croise la ligne d'alarme (61, 62) au sein de la durée prédéterminée ; et une partie de détermination de distance (53) configurée pour déterminer une distance entre le véhicule (2) et un autre véhicule arrêté devant le véhicule (2) dans une voie,

dans lequel

la partie de détermination et d'alarme (52) est configurée pour réaliser, lorsque la distance est inférieure ou égale à une valeur prédéterminée, une commande de réduction d'alarme pour réduire l'opération de l'unité d'alarme par rapport à lorsque la distance est supérieure à la valeur prédéterminée,

la partie de détermination et d'alarme (52) est configurée pour régler une longueur de la ligne d'alarme (61, 62) sur une première longueur lorsque la distance est une première distance, et

la partie de détermination et d'alarme (52) est configurée pour régler la longueur de la ligne d'alarme (61, 62) sur une seconde longueur, qui est plus courte que la première longueur, en tant que commande de réduction d'alarme lorsque la distance est une seconde distance, qui est inférieure à la première distance.

2.  Système d'alarme (1 ; 10) destiné à un véhicule (2) selon la revendication 1, dans lequel l'unité d'alarme inclut un premier dispositif d'alarme (41) et un second dispositif d'alarme (42) ;

la partie de détermination et d'alarme (52) est configurée pour activer le premier dispositif d'alarme (41) et le second dispositif d'alarme (42) lorsque la distance est supérieure à la valeur prédéterminée ; et

la partie de détermination et d'alarme (52) est configurée pour ne pas activer le premier dispositif d'alarme (41), mais pour activer le second dispositif d'alarme (42) en tant que commande de réduction d'alarme lorsque la distance est inférieure ou égale à la valeur prédéterminée.

3.  Système d'alarme (1 ; 10) destiné à un véhicule (2) selon la revendication 2, dans lequel le premier dispositif d'alarme (41) est configuré pour déclencher une alarme de manière audible ; et

le second dispositif d'alarme (42) est configuré pour déclencher une alarme de manière visuelle.

# FIG.1

FIG.2

EP 3 576 072 B1

# FIG.3

# FIG.4

START

S10

NO ← 0≦v≦10km/h ?

↓ YES

S11
SETTING OF ALARM LINES

S12
NO ← IS THERE CROSSING OBJECT ?

↓ YES

S13
CALCULATION OF TTC

S14
NO ← TTC≦2sec ?

↓ YES

S15
TTC>1sec ? — NO →

S17
v=0? — YES →

↓ NO

S18
YES ← IS SPEAKER ALARM UNNECESSARY ?

↓ NO

S16
DISPLAY ALARM

S19
DISPLAY ALARM

S20
SPEAKER ALARM

RETURN

# FIG.5

```
┌──────────────────────────┐
│   DETERMINATION OF        │
│ NECESSITY FOR SPEAKER     │
│        ALARM             │
└──────────────────────────┘
              │         S30
              ▼
        ╱─────────────╲
       ╱      IS       ╲        NO
      ╱ THERE ANOTHER   ╲──────────────┐
      ╲    VEHICLE      ╱              │
       ╲  STOPPED ?    ╱               │
        ╲─────────────╱                │
              │YES    S31              │
              ▼                        │
        ╱─────────────╲                │
       ╱               ╲    NO         │
      ╱   d ≦ 3m        ╲──────────┐   │
      ╲      ?          ╱          │   │
       ╲               ╱           │   │
        ╲─────────────╱            │   │
              │YES     S32         S33 │
              ▼                    │   ▼
   ┌──────────────────┐    ┌──────────────────┐
   │ SPEAKER ALARM IS │    │ SPEAKER ALARM IS │
   │   UNNECESSARY    │    │    NECESSARY     │
   └──────────────────┘    └──────────────────┘
              │                      │
              │◄─────────────────────┘
              ▼
        ┌──────────┐
        │  RETURN  │
        └──────────┘
```

# FIG.6

```
                    START

                         │
NO                       ▼         S50
◄──────────────◇ 0≦v≦10km/h ◇
│                  ?
│                        │ YES        S51
│                        ▼
│              ┌─────────────────────┐
│              ║   SETTING OF        ║
│              ║   ALARM LINES       ║
│              └─────────────────────┘
│                        │
│                        ▼            S52
│  NO            IS THERE
◄──────────◇ CROSSING OBJECT ◇
│                  ?
│                        │ YES        S53
│                        ▼
│              ┌─────────────────────┐
│              │   CALCULATION       │
│              │      OF TTC         │
│              └─────────────────────┘
│                        │
│                        ▼            S54
│  NO
◄──────────◇  TTC≦2sec  ◇
│                  ?
│                        │ YES
│                        ▼            S55
│                                         NO
│              ◇  TTC>1sec  ◇ ──────────────┐
│                  ?                         │
│                        │ YES    YES        ▼          S57
│                        │ ◄───────────◇   v=0?   ◇
│                        │                             │
│                        ▼      S56         │ NO       S58
│              ┌─────────────────┐    ┌─────────────────┐
│              │  DISPLAY ALARM  │    │  DISPLAY ALARM  │
│              └─────────────────┘    └─────────────────┘
│                        │                   │          S59
│                        │            ┌─────────────────┐
│                        │            │  SPEAKER ALARM  │
│                        │            └─────────────────┘
│                        │                   │
└────────────────────────┼───────────────────┘
                         ▼
                    RETURN
```

# FIG.7

```
        ┌─────────────────┐
        │   SETTING OF     │
        │  ALARM LINES     │
        └─────────────────┘
                │
                │         S70
                ▼
          ╱─────────────╲
         ╱   IS THERE     ╲        NO
        ╱ ANOTHER VEHICLE  ╲──────────────────┐
        ╲     STOPPED      ╱                   │
         ╲       ?        ╱                    │
          ╲─────────────╱                      │
                │ YES        S71               │
                ▼                              │
          ╱─────────────╲      NO              │
         ╱   d≦5m        ╲────────────────────►│
         ╲     ?        ╱                       │
          ╲───────────╱         S72            │         S73
                │ YES                          │
                ▼                              ▼
    ┌────────────────────────┐   ┌────────────────────────┐
    │ SETTING OF ALARM LINES │   │ SETTING OF ALARM LINES │
    │     (LENGTH: L2)       │   │     (LENGTH: L1)       │
    └────────────────────────┘   └────────────────────────┘
                │                          │
                ▼◄─────────────────────────┘
        ┌─────────────────┐
        │     RETURN      │
        └─────────────────┘
```

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012160103 A
- JP 2007233864 A
- US 9770987 B1
- EP 3021305 A2
- US 2018118202 A1
- JP 2010208583 A